# EUROPEAN PATENT SPECIFICATION

(11) **EP 3 361 781 B1**
(45) Date of publication and mention of the grant of the patent: **26.06.2019**
(21) Application number: 15907008.5
(22) Date of filing: 30.10.2015
(51) Int. Cl.: H04W 36/34, H04W 24/02, H04W 24/04, H04W 36/00, H04W 36/04, H04W 36/06, H04W 36/30, H04W 24/10

(54) **RESIDENT CELL DETERMINATION METHOD, USER EQUIPMENT AND NETWORK DEVICE**
RESIDENTZELLENBESTIMMUNGSVERFAHREN, BENUTZERGERÄT UND NETZWERKVORRICHTUNG
PROCÉDÉ DE DÉTERMINATION DE CELLULE RÉSIDENTE, ÉQUIPEMENT UTILISATEUR ET DISPOSITIF DE RÉSEAU

(43) Date of publication of application: 15.08.2018
(73) Proprietor: Huawei Technologies Co., Ltd., Longgang District Shenzhen, Guangdong 518129 (CN)
(72) Inventor: SONG, Ping, Shenzhen Guangdong 518129 (CN); ZHANG, Hongzhuo, Shenzhen Guangdong 518129 (CN)
(74) Representative: Gill Jennings & Every LLP
(86) International application number: PCT/CN2015/093419
(87) International publication number: WO 2017/070946

(56) References cited:
- WO-A1-2010/140053
- CN-A- 104 519 510
- CN-A- 104 756 549
- US-A1- 2008 176 563
- US-A1- 2008 220 784

## Description

### TECHNICAL FIELD

Aspects of the present disclosure relate to communications technologies, and in particular, to a camped cell determining method, user equipment, and a network device.

### BACKGROUND

User equipment (UE) enters an idle mode after being powered on. To obtain a normal service, after selecting a public land mobile network (PLMN), the UE selects a suitable cell that belongs to the PLMN, to camp on. The process is referred to as a cell selection process. The cell selection process needs to meet a criterion S.

Signal strength of a serving cell and that of a neighboring cell vary with movement of the UE, and therefore the UE needs to reselect a most suitable cell to camp on. The process is referred to as cell reselection. During cell reselection, a candidate cell also needs to meet the criterion S. A cell reselection criterion includes a quality level threshold criterion H and a cell queuing criterion R. For a hierarchical cell structure (HCS), the criterion H determines whether to queue cells in a priority-based order according to a hierarchical cell reselection rule. If a system message indicates that the HCS is not used, the criterion R is used instead of the criterion H.

Regardless of the criterion H or the criterion R, a relatively large quantity of reselection parameters such as a frequency priority, a frequency offset, and a reselection threshold are used during cell reselection, and network coverage is diversified. Therefore, the UE may be unable to meet all cell reselection conditions, and therefore can camp only on a current cell. There may be the following case: Signal strength or signal quality of the currently camped cell of the UE is worse than signal strength or signal quality of another cell, and therefore the currently camped cell has a higher network disconnection rate, call loss rate, and the like than the another cell, leading to lower communication reliability.

WO 2010/140053 relates to methods and apparatus for measurement enhanced communications terminal enabling self-optimizing networks in air interface communications systems. US 2008/0220784 relates to method and apparatus for adjusting a reselection timer and cell ranking criteria, and reporting degraded signal measurement of a serving cell.

### SUMMARY

Aspects of the present disclosure provide a camped cell determining method, user equipment, and a network device, to improve communication reliability.

Various aspects of the present disclosure have been defined in the independent claims. Further technical features of each of these aspects have been defined in the respective dependent claims.

The aspects of the present disclosure provide the camped cell determining method, the user equipment, and the network device. The method may include the following steps: The UE determines whether the UE needs to reselect a cell; if the UE does not need to reselect the cell, the UE obtains the parameter information of the camped cell and the parameter information of the at least one non-camped cell; the UE determines, according to the parameter information of the camped cell and the parameter information of the any non-camped cell, whether the preset condition is met; if the preset condition is met, the UE uses the corresponding non-camped cell as the candidate cell; and the UE selects, from the at least one candidate cell, the cell corresponding to the maximum parameter information as the new camped cell, or selects, from the at least one candidate cell, the any candidate cell as the new camped cell. The preset condition is used to ensure that the parameter information of the non-camped cell is greater than the parameter information of the camped cell. Therefore, the UE can select a better cell from the camped cell and the non-camped cell to camp on, and the camped cell used after the updating has a lower network disconnection rate and call loss rate, so that communication reliability is ensured.

### BRIEF DESCRIPTION OF DRAWINGS

To describe the technical solutions in the aspects of the present disclosure more clearly, the following briefly describes the accompanying drawings required for describing the aspects. Apparently, the accompanying drawings in the following description show merely some aspects of the present disclosure, and persons of ordinary skill in the art may still derive other drawings from these accompanying drawings without creative efforts.
FIG. 1 is a flowchart of a camped cell determining method according to an aspect of the present disclosure;
FIG. 2 is an interaction flowchart of a camped cell determining method according to an aspect of the present disclosure;
FIG. 3 is a schematic diagram of a relationship between UE, a base station, and an OSS device;
FIG. 4 is an interaction flowchart of a camped cell determining method according to another aspect of the present disclosure;
FIG. 5 is an interaction flowchart of a camped cell determining method according to still another aspect of the present disclosure;
FIG. 6A and FIG. 6B are a schematic diagram of an MDT enhancement mechanism according to the present disclosure;
FIG. 7 is a schematic structural diagram of user equipment according to an aspect of the present disclosure;
FIG. 8 is a schematic structural diagram of user equipment according to another aspect of the present disclosure;
FIG. 9 is a schematic structural diagram of a network device according to an aspect of the present disclosure;
FIG. 10 is a schematic structural diagram of a network device according to another aspect of the present disclosure;
FIG. 11 is a schematic structural diagram of user equipment according to still another aspect of the present disclosure;
FIG. 12 is a schematic structural diagram of user equipment according to an aspect of the present disclosure;
FIG. 13 is a schematic structural diagram of user equipment according to another aspect of the present disclosure;
FIG. 14 is a schematic structural diagram of a network device according to an aspect of the present disclosure;
FIG. 15 is a schematic structural diagram of a network device according to another aspect of the present disclosure; and
FIG. 16 is a schematic structural diagram of user equipment according to still another aspect of the present disclosure.

### DESCRIPTION OF ASPECTS

The following clearly describes the technical solutions in the aspects of the present disclosure with reference to the accompanying drawings in the aspects of the present disclosure. Apparently, the described aspects are merely some but not all of the aspects of the present disclosure. All other aspects obtained by persons of ordinary skill in the art based on the aspects of the present disclosure without creative efforts shall fall within the protection scope of the present disclosure.

The present disclosure is applicable to determining a camped cell in one type of communications systems, and is also applicable to determining a camped cell in different types of communications systems. The communications system herein may be the global system for mobile communications (GSM) system or code division multiple access (CDMA) system or the like of 2G system, time division-synchronous code division multiple access (TD-SCDMA) system or wideband code division multiple access (WCDMA) system or the like of 3G system, time division long term evolution (TD-LTE) system or LTE-FDD system of 4G, a related system of a standard later than 4G, or the like.

User equipment (UE) enters an idle mode after being powered on. To obtain a normal service, after selecting a public land mobile network PLMN, the UE needs to enter a cell selection process. The cell selection process needs to meet a criterion S.

The criterion S has the following conditions:
For a frequency division duplex (FDD) cell, Srxlev>0 and Squal>0; and
for a time division duplex (TDD) cell, Squal>0, where
Squal=Qqualmeas-(Qqualmin+Qqualminoffset); and
Srxlev=Qrxlevmeas-(Qrxlevmin+Qrxlevminoffset)-Pcompensation. For specific parameters, refer to Table 1.

**Table 1**

| **Parameter** | **Description** |
|---|---|
| Squal | Cell selection quality value (dB), used only for an FDD cell |
| Srxlev | Cell selection received signal level value (dBm) |
| Qqualmeas | Measured cell quality value, used only for an FDD cell For the FDD cell, received signal quality is indicated by an average common pilot channel (CPICH) Ec/No (dB) |
| Qrxlevmeas | Measured cell received signal level value CPICH received signal code power (RSCP) of a received signal is used for an FDD cell (dBm) |
| | Primary common control physical channel (P-CCPCH) RSCP of a received signal is used for a TDD cell (dBm) |
| Qqualmin | Minimum quality standard, where if signal quality of a cell is lower than the value, it may be considered that UE is out of a service scope of the current cell |
| Qrxlevmin | Minimum access level, where if signal quality of a cell is lower than the value, it may be considered that UE is out of a service scope of the current cell |
| Pcompensation | max(UE_TXPWR_MAX_RACH-P_MAX, 0) |
| | (dB) |
| | UE_TXPWR_MAX_RACH is maximum allowed uplink transmit power of UE |
| | P MAX is maximum carrier output power of the UE (dBm) |
| | According to a network coverage plan, UE_TXPWR_MAX_RACH is set on a network side. When the maximum transmit power of the UE is less than the parameter value, Pcompensation determines a scaling extent of actual cell coverage, that is, Pcompensation is a value of compensation caused by limitation of the maximum transmit power of the UE |

Signal strength of a serving cell and that of a neighboring cell vary with movement of the UE, and therefore the UE needs to reselect a most suitable cell to camp on. The process is referred to as cell reselection. During cell reselection, a candidate cell also needs to meet the criterion S. A cell reselection criterion includes a quality level threshold criterion H and a cell queuing criterion R. For a hierarchical cell structure HCS, the criterion H determines whether to queue cells in a priority-based order according to a hierarchical cell reselection rule. If a system message indicates that the HCS is not used, the criterion R is used instead of the criterion H.

Regardless of the criterion H or the criterion R, a relatively large quantity of reselection parameters such as a frequency priority, a frequency offset, and a reselection threshold are used during cell reselection, and network coverage is diversified. Therefore, the UE may be unable to meet all cell reselection conditions, and therefore can camp only on a current cell. There may be the following case: Signal strength or signal quality of the currently camped cell of the UE is worse than signal strength or signal quality of another cell, and therefore the currently camped cell has a higher network disconnection rate, call loss rate, and the like than the another cell, leading to lower communication reliability.

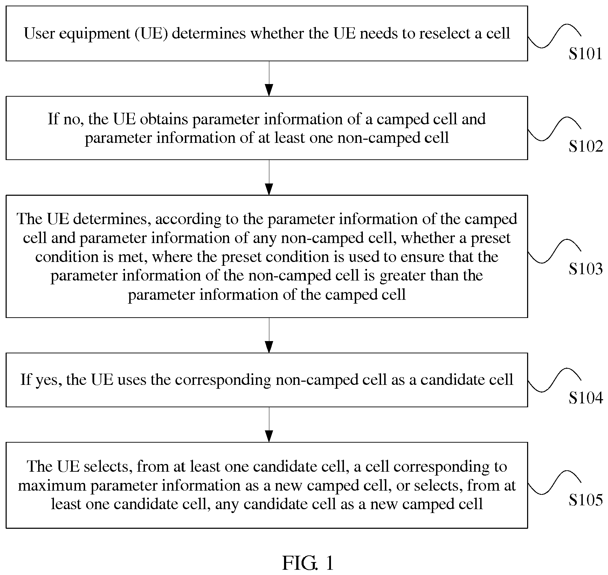

To resolve the prior-art problem, FIG. 1 is a flowchart of a camped cell determining method according to an aspect of the present disclosure. The method is executed by user equipment (UE). As shown in FIG. 1, the method specifically includes the following procedure.

S101. The user equipment (UE) determines whether the UE needs to reselect a cell.

S102. If the UE does not need to reselect the cell, the UE obtains parameter information of a camped cell and parameter information of at least one non-camped cell.

For example, S101 and S102 are described as follows: The UE determines, by using a criterion H or a criterion R, whether the UE needs to reselect a cell. A cell reselection method is the same as that in the prior art, and details are not described herein. After the UE determines that the UE does not meet a cell reselection condition, the UE obtains the parameter information of the camped cell and the parameter information of the at least one non-camped cell. The parameter information may be reference signal received power (RSRP) or reference signal received quality (RSRQ).

S103. The UE determines, according to the parameter information of the camped cell and parameter information of any non-camped cell, whether a preset condition is met, where the preset condition is used to ensure that the parameter information of the non-camped cell is greater than the parameter information of the camped cell.

Specifically, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold. The preset condition may be embedded in a cell selection/reselection process in the 3rd generation partnership project (3GPP) 304, that is, may be carried in any message in the process. Alternatively, the preset condition may be sent by a base station to the UE by using a broadcast message, a paging message, a release message, a handover message, or the like. A method for obtaining the preset condition is not limited in this aspect of the present disclosure. It should be noted that the non-camped cell means that the UE is in a coverage area of the non-camped cell, but the UE does not camp on the cell.

S104. If the preset condition is met, the UE uses the corresponding non-camped cell as a candidate cell.

S105. The UE selects, from at least one candidate cell, a cell corresponding to maximum parameter information as a new camped cell, or selects, from at least one candidate cell, any candidate cell as a new camped cell.

With reference to S104 and S105, for example, the parameter information is RSRQ, the camped cell of the UE is A, and non-camped cells are B, C, and D. The UE determines that RSRQ of the camped cell A is less than the first threshold, and the UE determines that both RSRQ of the non-camped cell B and that of the non-camped cell C are greater than the second threshold. Therefore, the UE uses the non-camped cell B and the non-camped cell C as candidate cells. Finally, the UE randomly selects B or C as a new camped cell; or the UE compares the RSRQ of B with that of C, and selects a cell corresponding to better RSRQ as a new camped cell.

The camped cell determining method provided in this aspect of the present disclosure may include the following steps: The user equipment (UE) determines whether the UE needs to reselect a cell; if the UE does not need to reselect the cell, the UE obtains the parameter information of the camped cell and the parameter information of the at least one non-camped cell; the UE determines, according to the parameter information of the camped cell and the parameter information of the any non-camped cell, whether the preset condition is met; if the preset condition is met, the UE uses the corresponding non-camped cell as the candidate cell; and the UE selects, from the at least one candidate cell, the cell corresponding to the maximum parameter information as the new camped cell, or selects, from the at least one candidate cell, the any candidate cell as the new camped cell. The preset condition is used to ensure that the parameter information of the non-camped cell is greater than the parameter information of the camped cell. Therefore, when the UE does not meet cell reselection condition, the UE can still select a better cell from the camped cell and the non-camped cell to camp on. The camped cell used after the updating has a lower network disconnection rate and call loss rate than the camped cell used before the updating, so that communication reliability is ensured.

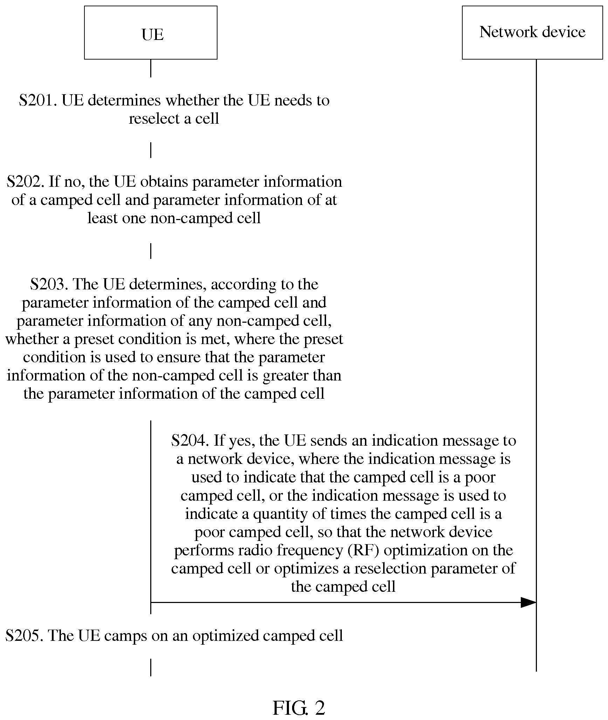

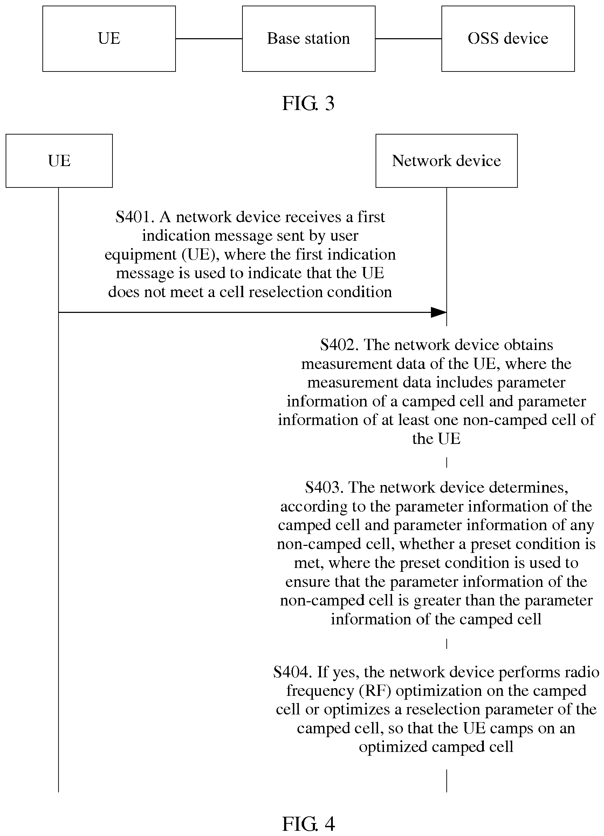

FIG. 2 is an interaction flowchart of a camped cell determining method according to an aspect of the present disclosure. Network elements in the method include UE and a network device. It should be noted that, the network device herein may be a base station or an operations support system (OSS) device. A difference between the method and the method corresponding to FIG. 1 is as follows: After the UE determines that parameter information of a camped cell and parameter information of any non-camped cell meet a preset condition, the UE sends an indication message to the network device, so that the network device optimizes the camped cell according to the indication message. FIG. 3 is a schematic diagram of a relationship between UE, a base station, and an OSS device. As shown in FIG. 3, when the network device is an OSS device, the UE interacts with the OSS device by using the base station. The following specifically describes the camped cell determining method. As shown in FIG. 2, the method may include the following steps.

S201. The user equipment (UE) determines whether the UE needs to reselect a cell.

S202. If the UE does not need to reselect the cell, the UE obtains parameter information of a camped cell and parameter information of at least one non-camped cell.

S203. The UE determines, according to the parameter information of the camped cell and parameter information of any non-camped cell, whether a preset condition is met, where the preset condition is used to ensure that the parameter information of the non-camped cell is greater than the parameter information of the camped cell.

Specifically, a process of steps S201 to S203 is the same as that of steps S101 to S103, and details are not described herein again.

S204. If the preset condition is met, the UE sends an indication message to the network device, where the indication message is used to indicate that the camped cell is a poor camped cell, or the indication message is used to indicate a quantity of times that the camped cell is a poor camped cell, so that the network device performs radio frequency (RF) optimization on the camped cell or optimizes a reselection parameter of the camped cell.

S205. The UE camps on an optimized camped cell.

With reference to S204 and S205, the camped cell is a poor camped cell provided that the UE does not meet a reselection condition but meets the preset condition. In one case, the indication message is used to indicate that the camped cell is a poor camped cell. In another case, because the UE may frequently move, the camped cell of the UE may be a poor camped cell in a time period, and may not be a poor camped cell in another time period. The UE may collect, in a preset period, statistics on the quantity of times the camped cell is a poor camped cell, and send the quantity of times to the network device, so that the network device performs radio frequency (RF) optimization on the camped cell or optimizes the reselection parameter of the camped cell. It should be noted that the indication message may be a radio resource control (RRC) setup request message, a minimization of drive tests (MDT) message, a location area code (LAC) update message, or the like.

In an optional manner, the RF optimization is to ensure good reception quality while network coverage is optimized. In addition, a network has a correct neighbor relationship, so as to ensure that radio signals are normally distributed during next-step service optimization, to lay a good foundation for optimization. Specifically, the RF optimization may include a manner, for example, adjusting antenna delivery power, an azimuth, or a downtilt of the camped cell. For example, coverage quality of the camped cell may be changed by increasing the antenna delivery power, adjusting the azimuth, increasing the downtilt, or the like. An RF optimization method provided in the prior art may be specifically used, and the optimization method is not limited in the present disclosure.

In another optional manner, the network device may optimize the reselection parameter of the camped cell, such as a frequency priority or a cell reselection threshold. The frequency priority may be optimized by increasing or decreasing the frequency priority, and the cell reselection threshold may be optimized by decreasing or increasing the cell reselection threshold. Therefore, the UE can select a cell with better strength/quality as a camped cell. For example, in terms of the reselection parameter, the cell reselection threshold may need to be greater than -105 dBm, but signal quality of a target cell is -106 dBm and quality of the camped cell is -125 dBm. Therefore, currently, the UE cannot reach the target cell. In this case, the reselection threshold may be changed to -106 dBm. In this way, the UE can reach the target cell instead of camping on the camped cell. Generally, a manner of optimizing the reselection parameter and a manner of selecting a better camped cell by the UE may be referred to as radio resource management (RRM) optimization.

In the camped cell determining method provided in this aspect of the present disclosure, the UE sends the indication message to the network device, so that the network device can perform RF optimization on the camped cell or optimize the reselection parameter of the camped cell, and then it is ensured that the UE can camp on a cell with better RSRP or RSRQ, and communication reliability is improved.

FIG. 4 is an interaction flowchart of a camped cell determining method according to another aspect of the present disclosure. Network elements in the method include UE and a network device. The network device is a base station or an OSS device. A difference between the method and the method corresponding to FIG. 1 is as follows: In the method, the network device determines, according to parameter information of a camped cell and parameter information of any non-camped cell, whether a preset condition is met, and finally, the network device optimizes the camped cell. As shown in FIG. 4, the method specifically includes the following procedure.

S401. The network device receives a first indication message sent by the user equipment (UE), where the first indication message is used to indicate that the UE does not meet a cell reselection condition.

The UE determines, according to a criterion H and a criterion R, whether the UE meets the cell reselection condition.

S402. The network device obtains measurement data of the UE, where the measurement data includes parameter information of a camped cell and parameter information of at least one non-camped cell of the UE.

The measurement data may be MDT data or measurement report (MR) data. The parameter information includes reference signal received power (RSRP) or reference signal received quality (RSRQ).

S403. The network device determines, according to the parameter information of the camped cell and parameter information of any non-camped cell, whether a preset condition is met, where the preset condition is used to ensure that the parameter information of the non-camped cell is greater than the parameter information of the camped cell.

Specifically, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

S404. If the preset condition is met, the network device performs radio frequency (RF) optimization on the camped cell or optimizes a reselection parameter of the camped cell, so that the UE camps on an optimized camped cell.

A method in which the network device performs radio frequency (RF) optimization on the camped cell or optimizes the reselection parameter of the camped cell is the same as the optimization method in S204, and details are not described herein again.

In the camped cell determining method provided in this aspect of the present disclosure, the UE sends the first indication message to the network device, so that the network device can perform RF optimization on the camped cell or optimize the reselection parameter of the camped cell, and then it is ensured that the UE can camp on a cell with better RSRP or RSRQ, and communication reliability is improved.

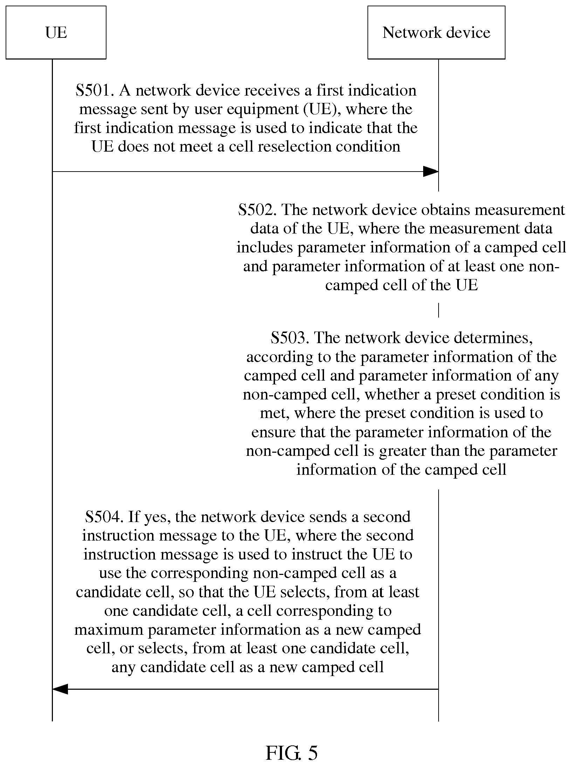

FIG. 5 is an interaction flowchart of a camped cell determining method according to still another aspect of the present disclosure. Network elements in the method include UE and a network device. The network device is a base station or an OSS device. A difference between the method and the method corresponding to FIG. 1 is as follows: In the method, the network device determines, according to parameter information of a camped cell and parameter information of any non-camped cell, whether a preset condition is met. As shown in FIG. 5, the method specifically includes the following procedure:
S501. The network device receives a first indication message sent by the user equipment (UE), where the first indication message is used to indicate that the UE does not meet a cell reselection condition.
S502. The network device obtains measurement report measurement data of the UE, where the measurement report measurement data includes parameter information of a camped cell and parameter information of at least one non-camped cell of the UE.
S503. The network device determines, according to the parameter information of the camped cell and parameter information of any non-camped cell, whether a preset condition is met, where the preset condition is used to ensure that the parameter information of the non-camped cell is greater than the parameter information of the camped cell.
S504. If the preset condition is met, the network device sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell.

Specifically, S501 to S503 are the same as steps S401 to S403, and details are not described herein again. The corresponding non-camped cell in step S504 is a non-camped cell that meets the preset condition. Finally, the UE selects, from the candidate cell, the cell corresponding to the maximum parameter information as the new camped cell, or selects, from the candidate cell, the any candidate cell as the new camped cell.

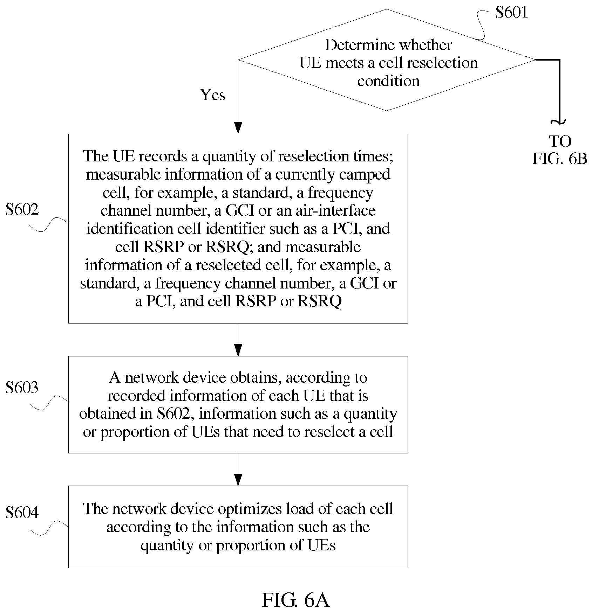

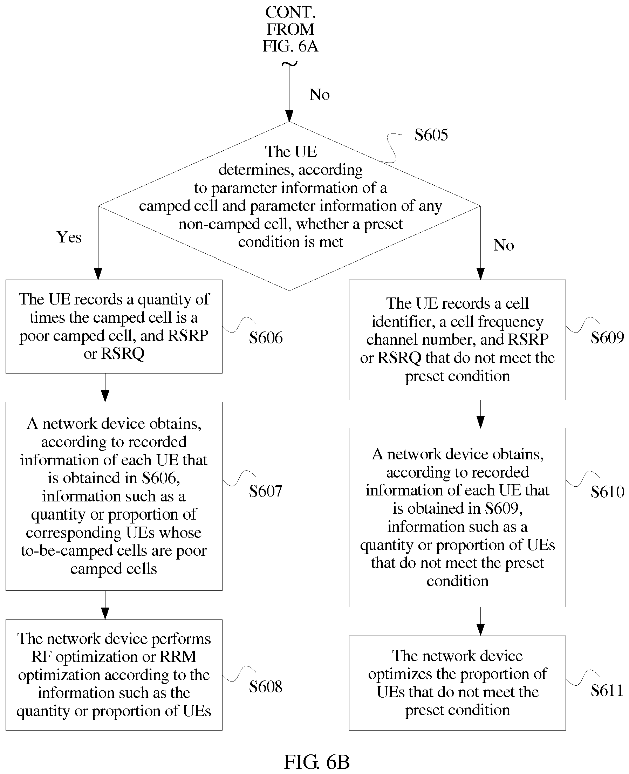

The UE may further notify the network device of information, for example, information that the camped cell of the UE is a poor camped cell, a quantity of times that the camped cell of the UE is a poor camped cell, or a quantity of cell reselection times, so that the network device optimizes load of each cell, the camped cell, or the like according to the information. Specifically, FIG. 6A and FIG. 6B are a schematic diagram of an MDT enhancement mechanism according to the present disclosure. As shown in FIG. 6A and FIG. 6B. The mechanism may include the following steps.

S601. Determine whether UE meets a cell reselection condition; and if the UE meets the cell reselection condition, perform step S602; or if the UE does not meet the cell reselection condition, perform step S605.

S602. The UE records a quantity of reselection times; measurable information of a currently camped cell, for example, a standard, a frequency channel number, a global cell identity (GCI) or an air-interface identification cell identifier such as an LTE cell identifier: a physical cell identifier (PCI), and cell RSRP or RSRQ; and measurable information of a reselected cell, for example, a standard, a frequency channel number, a GCI or a PCI, and cell RSRP or RSRQ.

S603. A network device obtains, according to recorded information of each UE that is obtained in S602, information such as a quantity or proportion of UEs that need to reselect a cell.

S604. The network device optimizes load of each cell according to the information such as the quantity or proportion of UEs.

S605. The UE determines, according to parameter information of a camped cell and parameter information of any non-camped cell, whether a preset condition is met; and if the preset condition is met, performs S606; or if the preset condition is not met, performs S609.

S606. The UE records a quantity of times the camped cell is a poor camped cell, and RSRP or RSRQ.

S607. A network device obtains, according to recorded information of each UE that is obtained in S606, information such as a quantity or proportion of UEs corresponding to a poor camped cell.

S608. The network device performs RF optimization or RRM optimization according to the information such as the quantity or proportion of UEs.

S609. The UE records a cell identifier, a cell frequency channel number, and RSRP or RSRQ that do not meet the preset condition.

S610. A network device obtains, according to recorded information of each UE that is obtained in S609, information such as a quantity or proportion of UEs that do not meet the preset condition.

S611. The network device optimizes the proportion of UEs that do not meet the preset condition.

The MDT mechanism includes: The network device optimizes the load of each cell, the camped cell, or the like according to the information, for example, the information that the camped cell is a poor camped cell, the quantity of times the camped cell is a poor camped cell, or the quantity of cell reselection times, so as to improve communication reliability.

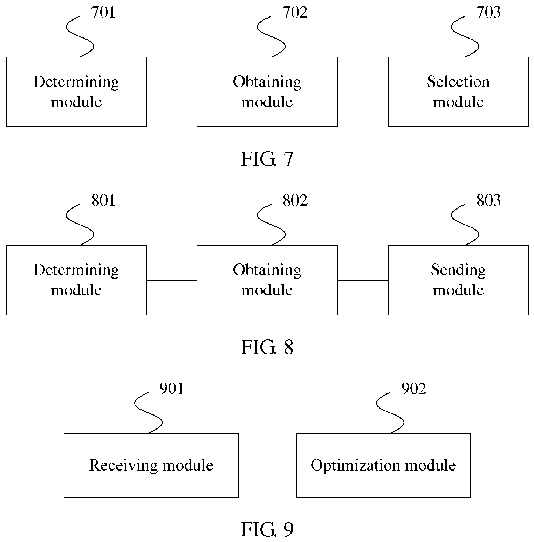

FIG. 7 is a schematic structural diagram of user equipment according to an aspect of the present disclosure. The user equipment includes a determining module 701, an obtaining module 702, and a selection module 703. The determining module 701 is configured to determine whether the user equipment needs to reselect a cell. If the UE does not need to reselect the cell, the obtaining module 702 obtains parameter information of a camped cell and parameter information of at least one non-camped cell. The determining module 701 is further configured to determine, according to the parameter information of the camped cell and parameter information of any non-camped cell, whether a preset condition is met. If the preset condition is met, the user equipment uses the corresponding non-camped cell as a candidate cell. The selection module 703 is configured to: select, from at least one candidate cell, a cell corresponding to maximum parameter information as a new camped cell, or select, from at least one candidate cell, any candidate cell as a new camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The user equipment provided in this aspect may be configured to perform the method steps in the aspect shown in FIG. 1. Implementation principles and technical effects are similar, and details are not described herein again.

FIG. 8 is a schematic structural diagram of user equipment according to another aspect of the present disclosure. The user equipment includes a determining module 801, an obtaining module 802, and a sending module 803. The determining module 801 is configured to determine whether the user equipment needs to reselect a cell. If the UE does not need to reselect the cell, the obtaining module 802 obtains parameter information of a camped cell and parameter information of at least one non-camped cell. The determining module 801 is further configured to determine, according to the parameter information of the camped cell and parameter information of any non-camped cell, whether a preset condition is met. If the preset condition is met, the sending module 803 sends an indication message to a network device, where the indication message is used to indicate that the camped cell is a poor camped cell, or the indication message is used to indicate a quantity of times the camped cell is a poor camped cell, so that the network device performs radio frequency (RF) optimization on the camped cell or optimizes a reselection parameter of the camped cell. The user equipment camps on an optimized camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this aspect may be configured to perform the method steps corresponding to the UE in the aspect shown in FIG. 2. Implementation principles and technical effects are similar, and details are not described herein again.

FIG. 9 is a schematic structural diagram of a network device according to an aspect of the present disclosure. The network device includes a receiving module 901 and an optimization module 902. The receiving module 901 is configured to receive an indication message sent by user equipment (UE), where the indication message is used to indicate that a camped cell is a poor camped cell, or the indication message is used to indicate a quantity of times that a camped cell is a poor camped cell. The optimization module 902 is configured to: perform radio frequency (RF) optimization on the camped cell or optimize a reselection parameter of the camped cell, so that the UE camps on an optimized camped cell.

The network device is a base station or an operations support system (OSS) device.

The network device provided in this aspect may be configured to perform the method steps corresponding to the network device in the aspect shown in FIG. 2. Implementation principles and technical effects are similar, and details are not described herein again.

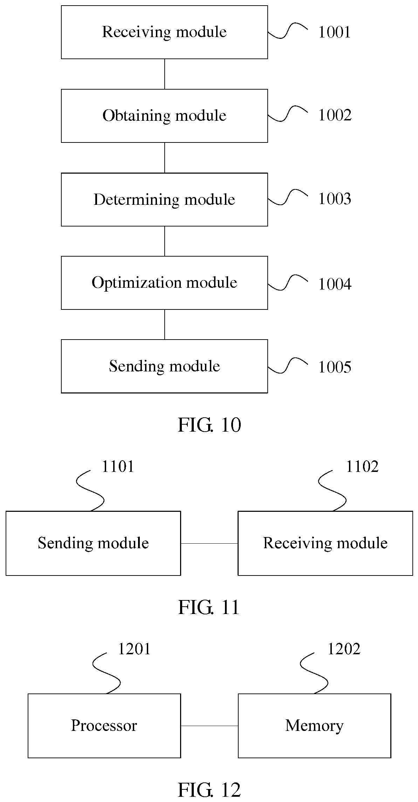

FIG. 10 is a schematic structural diagram of a network device according to another aspect of the present disclosure. The network device includes a receiving module 1001, an obtaining module 1002, a determining module 1003, an optimization module 1004, and a sending module 1005. The receiving module 1001 is configured to receive a first indication message sent by user equipment (UE), where the first indication message is used to indicate that the UE does not meet a cell reselection condition. The obtaining module 1002 is configured to obtain measurement data of the UE, where the measurement data includes parameter information of a camped cell and parameter information of at least one non-camped cell of the UE. The determining module 1003 is configured to determine, according to the parameter information of the camped cell and parameter information of any non-camped cell, whether a preset condition is met. If the preset condition is met, the optimization module 1004 performs radio frequency (RF) optimization on the camped cell or optimizes a reselection parameter of the camped cell, so that the UE camps on an optimized camped cell; or if the preset condition is met, the sending module 1005 sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell. The preset condition is used to ensure that the parameter information of the non-camped cell is greater than the parameter information of the camped cell.

Further, the parameter information includes reference signal received power (RSRP) or reference signal received quality (RSRQ).

Still further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The network device provided in this aspect may be configured to perform the method steps corresponding to the network device in the aspect shown in FIG. 4 or FIG. 5. Implementation principles and technical effects are similar, and details are not described herein again.

FIG. 11 is a schematic structural diagram of user equipment according to still another aspect of the present disclosure. The user equipment includes a sending module 1101 and a receiving module 1102. The sending module 1101 is configured to send a first indication message to a network device, where the first indication message is used to indicate that the user equipment (UE) does not meet a cell reselection condition. The receiving module 1102 is configured to receive a second instruction message sent by the network device, where the second instruction message is used to instruct the UE to use, as a candidate cell, a non-camped cell that meets a preset condition, so that the UE selects, from at least one candidate cell, a cell corresponding to maximum parameter information as a new camped cell, or selects, from at least one candidate cell, any candidate cell as a new camped cell. The preset condition is used to ensure that parameter information of the non-camped cell is greater than parameter information of a camped cell.

The parameter information includes reference signal received power (RSRP) or reference signal received quality (RSRQ).

The preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this aspect may be configured to perform the method steps corresponding to the user equipment in the aspect shown in FIG. 5. Implementation principles and technical effects are similar, and details are not described herein again.

FIG. 12 is a schematic structural diagram of user equipment according to an aspect of the present disclosure. The user equipment includes a processor 1201 and a memory 1202. The processor 1201 is configured to determine whether the user equipment needs to reselect a cell. If the user equipment does not need to reselect the cell, the processor 1201 obtains parameter information of a camped cell and parameter information of at least one non-camped cell. The processor 1201 is further configured to determine, according to the parameter information of the camped cell and parameter information of any non-camped cell, whether a preset condition is met. If the preset condition is met, the user equipment uses the corresponding non-camped cell as a candidate cell. The processor 1201 is further configured to: select, from at least one candidate cell, a cell corresponding to maximum parameter information as a new camped cell, or select, from at least one candidate cell, any candidate cell as a new camped cell. The preset condition is used to ensure that the parameter information of the non-camped cell is greater than the parameter information of the camped cell. The memory 1202 is configured to store code corresponding to the actions performed by the processor.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The user equipment provided in this aspect may be configured to perform the method steps in the aspect shown in FIG. 1. Implementation principles and technical effects are similar, and details are not described herein again.

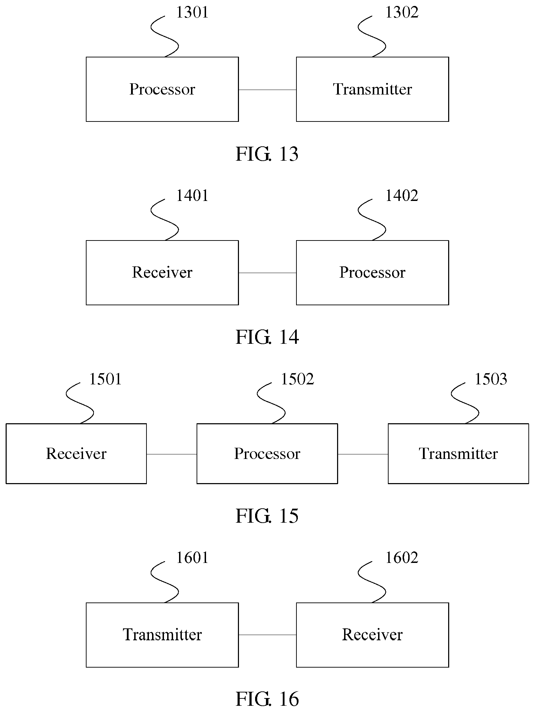

FIG. 13 is a schematic structural diagram of user equipment according to another aspect of the present disclosure. The user equipment includes a processor 1301 and a transmitter 1302. The processor 1301 is configured to determine whether the user equipment needs to reselect a cell. If the user equipment does not need to reselect the cell, the processor 1301 obtains parameter information of a camped cell and parameter information of at least one non-camped cell. The processor 1301 is further configured to determine, according to the parameter information of the camped cell and parameter information of any non-camped cell, whether a preset condition is met. If the preset condition is met, the transmitter 1302 sends an indication message to a network device, where the indication message is used to indicate that the camped cell is a poor camped cell, or the indication message is used to indicate a quantity of times the camped cell is a poor camped cell, so that the network device performs radio frequency (RF) optimization on the camped cell or optimizes a reselection parameter of the camped cell. The user equipment camps on an optimized camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this aspect may be configured to perform the method steps corresponding to the UE in the aspect shown in FIG. 2. Implementation principles and technical effects are similar, and details are not described herein again.

FIG. 14 is a schematic structural diagram of a network device according to an aspect of the present disclosure. The network device includes a receiver 1401 and a processor 1402. The receiver 1401 is configured to receive an indication message sent by user equipment (UE), where the indication message is used to indicate that a camped cell is a poor camped cell, or the indication message is used to indicate a quantity of times that a camped cell is a poor camped cell. The processor 1402 is configured to: perform radio frequency (RF) optimization on the camped cell or optimize a reselection parameter of the camped cell, so that the UE camps on an optimized camped cell.

The network device is a base station or an operations support system (OSS) device.

The network device provided in this aspect may be configured to perform the method steps corresponding to the network device in the aspect shown in FIG. 2. Implementation principles and technical effects are similar, and details are not described herein again.

FIG. 15 is a schematic structural diagram of a network device according to another aspect of the present disclosure. The network device includes a receiver 1501, a processor 1502, and a transmitter 1503. The receiver 1501 is configured to receive a first indication message sent by user equipment (UE), where the first indication message is used to indicate that the UE does not meet a cell reselection condition. The processor 1502 is configured to obtain measurement data of the UE, where the measurement data includes parameter information of a camped cell and parameter information of at least one non-camped cell of the UE. The processor 1502 is further configured to determine, according to the parameter information of the camped cell and parameter information of any non-camped cell, whether a preset condition is met. If the preset condition is met, the processor 1502 performs radio frequency (RF) optimization on the camped cell or optimizes a reselection parameter of the camped cell, so that the UE camps on an optimized camped cell; or if the preset condition is met, the transmitter 1503 sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell. The preset condition is used to ensure that the parameter information of the non-camped cell is greater than the parameter information of the camped cell.

Further, the parameter information includes reference signal received power (RSRP) or reference signal received quality (RSRQ).

Still further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The network device provided in this aspect may be configured to perform the method steps corresponding to the network device in the aspect shown in FIG. 4 or FIG. 5. Implementation principles and technical effects are similar, and details are not described herein again.

FIG. 16 is a schematic structural diagram of user equipment according to still another aspect of the present disclosure. The user equipment includes a transmitter 1601 and a receiver 1602. The transmitter 1601 is configured to send a first indication message to a network device, where the first indication message is used to indicate that the user equipment (UE) does not meet a cell reselection condition. The receiver 1602 is configured to receive a second instruction message sent by the network device, where the second instruction message is used to instruct the UE to use, as a candidate cell, a non-camped cell that meets a preset condition, so that the UE selects, from at least one candidate cell, a cell corresponding to maximum parameter information as a new camped cell, or selects, from at least one candidate cell, any candidate cell as a new camped cell. The preset condition is used to ensure that parameter information of the non-camped cell is greater than parameter information of a camped cell.

The parameter information includes reference signal received power (RSRP) or reference signal received quality (RSRQ).

The preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this aspect may be configured to perform the method steps corresponding to the user equipment in the aspect shown in FIG. 5. Implementation principles and technical effects are similar, and details are not described herein again.

Persons of ordinary skill in the art may understand that all or some of the steps of the method aspects may be implemented by a program instructing relevant hardware. The program may be stored in a computer-readable storage medium. When the program runs, the steps of the method aspects are performed. The storage medium includes any medium that can store program code, such as a ROM, a RAM, a magnetic disk, or an optical disc.

A method in which the network device performs radio frequency (RF) optimization on the camped cell or optimizes the reselection parameter of the camped cell is the same as the optimization method in S204, and details are not described herein again.

In the camped cell determining method provided in this embodiment of the present disclosure, the UE sends the first indication message to the network device, so that the network device can perform RF optimization on the camped cell or optimize the reselection parameter of the camped cell, and then it is ensured that the UE can camp on a cell with better RSRP or RSRQ, and communication reliability is improved.

FIG. 5 is an interaction flowchart of a camped cell determining method according to still another embodiment of the present disclosure. Network elements in the method include UE and a network device. The network device is a base station or an OSS device. A difference between the method and the method corresponding to FIG. 1 is as follows: In the method, the network device determines, according to parameter information of a camped cell and parameter information of any non-camped cell, whether a preset condition is met. As shown in FIG. 5, the method may include the following procedure:

S501. The network device receives a first indication message sent by the user equipment (UE), where the first indication message is used to indicate that the UE does not meet a cell reselection condition.

S502. The network device obtains measurement data of the UE, where the measurement data includes parameter information of a camped cell and parameter information of at least one non-camped cell of the UE.

S503. The network device determines, according to the parameter information of the camped cell and parameter information of any non-camped cell, whether a preset condition is met, where the preset condition is used to ensure that the parameter information of the non-camped cell is greater than the parameter information of the camped cell.

S504. If the preset condition is met, the network device sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell.

For example, S501 to S503 are the same as steps S401 to S403, and details are not described herein again. The corresponding non-camped cell in step S504 is a non-camped cell that meets the preset condition. Finally, the UE selects, from the candidate cell, the cell corresponding to the maximum parameter information as the new camped cell, or selects, from the candidate cell, the any candidate cell as the new camped cell.

The UE may further notify the network device of information, for example, information that the camped cell of the UE is a poor camped cell, a quantity of times that the camped cell of the UE is a poor camped cell, or a quantity of cell reselection times, so that the network device optimizes load of each cell, the camped cell, or the like according to the information. For example, FIG. 6A and FIG. 6B are a schematic diagram of an MDT enhancement mechanism according to the present disclosure. As shown in FIG. 6A and FIG. 6B. The mechanism may include the following steps.

S601. Determine whether UE meets a cell reselection condition; and if the UE meets the cell reselection condition, perform step S602; or if the UE does not meet the cell reselection condition, perform step S605.

S602. The UE records a quantity of reselection times; measurable information of a currently camped cell, for example, a standard, a frequency channel number, a global cell identity (GCI) or an air-interface identification cell identifier such as an LTE cell identifier: a physical cell identifier (PCI), and cell RSRP or RSRQ; and measurable information of a reselected cell, for example, a standard, a frequency channel number, a GCI or a PCI, and cell RSRP or RSRQ.

S603. A network device obtains, according to recorded information of each UE that is obtained in S602, information such as a quantity or proportion of UEs that need to reselect a cell.

S604. The network device optimizes load of each cell according to the information such as the quantity or proportion of UEs.

S605. The UE determines, according to parameter information of a camped cell and parameter information of any non-camped cell, whether a preset condition is met; and if the preset condition is met, performs S606; or if the preset condition is not met, performs S609.

S606. The UE records a quantity of times the camped cell is a poor camped cell, and RSRP or RSRQ.

S607. A network device obtains, according to recorded information of each UE that is obtained in S606, information such as a quantity or proportion of UEs corresponding to a poor camped cell.

S608. The network device performs RF optimization or RRM optimization according to the information such as the quantity or proportion of UEs.

S609. The UE records a cell identifier, a cell frequency channel number, and RSRP or RSRQ that do not meet the preset condition.

S610. A network device obtains, according to recorded information of each UE that is obtained in S609, information such as a quantity or proportion of UEs that do not meet the preset condition.

S611. The network device optimizes the proportion of UEs that do not meet the preset condition.

The MDT mechanism includes: The network device optimizes the load of each cell, the camped cell, or the like according to the information, for example, the information that the camped cell is a poor camped cell, the quantity of times the camped cell is a poor camped cell, or the quantity of cell reselection times, so as to improve communication reliability.

FIG. 7 is a schematic structural diagram of user equipment according to an embodiment of the present disclosure. The user equipment includes a determining module 701, an obtaining module 702, and a selection module 703. The determining module 701 is configured to determine whether the user equipment needs to reselect a cell. If the UE does not need to reselect the cell, the obtaining module 702 obtains parameter information of a camped cell and parameter information of at least one non-camped cell. The determining module 701 is further configured to determine, according to the parameter information of the camped cell and parameter information of any non-camped cell, whether a preset condition is met. If the preset condition is met, the user equipment uses the corresponding non-camped cell as a candidate cell. The selection module 703 is configured to: select, from at least one candidate cell, a cell corresponding to maximum parameter information as a new camped cell, or select, from at least one candidate cell, any candidate cell as a new camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The user equipment provided in this embodiment may be configured to perform the method steps in the embodiment shown in FIG. 1. Implementation principles and technical effects are similar, and details are not described herein again.

FIG. 8 is a schematic structural diagram of user equipment according to another embodiment of the present disclosure. The user equipment includes a determining module 801, an obtaining module 802, and a sending module 803. The determining module 801 is configured to determine whether the user equipment needs to reselect a cell. If the UE does not need to reselect the cell, the obtaining module 802 obtains parameter information of a camped cell and parameter information of at least one non-camped cell. The determining module 801 is further configured to determine, according to the parameter information of the camped cell and parameter information of any non-camped cell, whether a preset condition is met. If the preset condition is met, the sending module 803 sends an indication message to a network device, where the indication message is used to indicate that the camped cell is a poor camped cell, or the indication message is used to indicate a quantity of times the camped cell is a poor camped cell, so that the network device performs radio frequency (RF) optimization on the camped cell or optimizes a reselection parameter of the camped cell. The user equipment camps on an optimized camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this embodiment may be configured to perform the method steps corresponding to the UE in the embodiment shown in FIG. 2. Implementation principles and technical effects are similar, and details are not described herein again.

FIG. 9 is a schematic structural diagram of a network device according to an embodiment of the present disclosure. The network device includes a receiving module 901 and an optimization module 902. The receiving module 901 is configured to receive an indication message sent by user equipment (UE), where the indication message is used to indicate that a camped cell is a poor camped cell, or the indication message is used to indicate a quantity of times that a camped cell is a poor camped cell. The optimization module 902 is configured to: perform radio frequency (RF) optimization on the camped cell or optimize a reselection parameter of the camped cell, so that the UE camps on an optimized camped cell.

The network device is a base station or an operations support system (OSS) device.

The network device provided in this embodiment may be configured to perform the method steps corresponding to the network device in the embodiment shown in FIG. 2. Implementation principles and technical effects are similar, and details are not described herein again.

FIG. 10 is a schematic structural diagram of a network device according to another embodiment of the present disclosure. The network device includes a receiving module 1001, an obtaining module 1002, a determining module 1003, an optimization module 1004, and a sending module 1005. The receiving module 1001 is configured to receive a first indication message sent by user equipment (UE), where the first indication message is used to indicate that the UE does not meet a cell reselection condition. The obtaining module 1002 is configured to obtain measurement data of the UE, where the measurement data includes parameter information of a camped cell and parameter information of at least one non-camped cell of the UE. The determining module 1003 is configured to determine, according to the parameter information of the camped cell and parameter information of any non-camped cell, whether a preset condition is met. If the preset condition is met, the optimization module 1004 performs radio frequency (RF) optimization on the camped cell or optimizes a reselection parameter of the camped cell, so that the UE camps on an optimized camped cell; or if the preset condition is met, the sending module 1005 sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell. The preset condition is used to ensure that the parameter information of the non-camped cell is greater than the parameter information of the camped cell.

Further, the parameter information includes reference signal received power (RSRP) or reference signal received quality (RSRQ).

Still further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The network device provided in this embodiment may be configured to perform the method steps corresponding to the network device in the embodiment shown in FIG. 4 or FIG. 5. Implementation principles and technical effects are similar, and details are not described herein again.

FIG. 11 is a schematic structural diagram of user equipment according to still another embodiment of the present disclosure. The user equipment includes a sending module 1101 and a receiving module 1102. The sending module 1101 is configured to send a first indication message to a network device, where the first indication message is used to indicate that the user equipment (UE) does not meet a cell reselection condition. The receiving module 1102 is configured to receive a second instruction message sent by the network device, where the second instruction message is used to instruct the UE to use, as a candidate cell, a non-camped cell that meets a preset condition, so that the UE selects, from at least one candidate cell, a cell corresponding to maximum parameter information as a new camped cell, or selects, from at least one candidate cell, any candidate cell as a new camped cell. The preset condition is used to ensure that parameter information of the non-camped cell is greater than parameter information of a camped cell.

The parameter information includes reference signal received power (RSRP) or reference signal received quality (RSRQ).

The preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this embodiment may be configured to perform the method steps corresponding to the user equipment in the embodiment shown in FIG. 5. Implementation principles and technical effects are similar, and details are not described herein again.

FIG. 12 is a schematic structural diagram of user equipment according to an embodiment of the present disclosure. The user equipment includes a processor 1201 and a memory 1202. The processor 1201 is configured to determine whether the user equipment needs to reselect a cell. If the user equipment does not need to reselect the cell, the processor 1201 obtains parameter information of a camped cell and parameter information of at least one non-camped cell. The processor 1201 is further configured to determine, according to the parameter information of the camped cell and parameter information of any non-camped cell, whether a preset condition is met. If the preset condition is met, the user equipment uses the corresponding non-camped cell as a candidate cell. The processor 1201 is further configured to: select, from at least one candidate cell, a cell corresponding to maximum parameter information as a new camped cell, or select, from at least one candidate cell, any candidate cell as a new camped cell. The preset condition is used to ensure that the parameter information of the non-camped cell is greater than the parameter information of the camped cell. The memory 1202 is configured to store code corresponding to the actions performed by the processor.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The user equipment provided in this embodiment may be configured to perform the method steps in the embodiment shown in FIG. 1. Implementation principles and technical effects are similar, and details are not described herein again.

FIG. 13 is a schematic structural diagram of user equipment according to another embodiment of the present disclosure. The user equipment includes a processor 1301 and a transmitter 1302. The processor 1301 is configured to determine whether the user equipment needs to reselect a cell. If the user equipment does not need to reselect the cell, the processor 1301 obtains parameter information of a camped cell and parameter information of at least one non-camped cell. The processor 1301 is further configured to determine, according to the parameter information of the camped cell and parameter information of any non-camped cell, whether a preset condition is met. If the preset condition is met, the transmitter 1302 sends an indication message to a network device, where the indication message is used to indicate that the camped cell is a poor camped cell, or the indication message is used to indicate a quantity of times the camped cell is a poor camped cell, so that the network device performs radio frequency (RF) optimization on the camped cell or optimizes a reselection parameter of the camped cell. The user equipment camps on an optimized camped cell. The preset condition is used to ensure that the parameter information of the non-camped cell is greater than the parameter information of the camped cell.

The parameter information includes reference signal received power (RSRP) or reference signal received quality (RSRQ).

Further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this embodiment may be configured to perform the method steps corresponding to the UE in the embodiment shown in FIG. 2. Implementation principles and technical effects are similar, and details are not described herein again.

FIG. 14 is a schematic structural diagram of a network device according to an embodiment of the present disclosure. The network device includes a receiver 1401 and a processor 1402. The receiver 1401 is configured to receive an indication message sent by user equipment (UE), where the indication message is used to indicate that a camped cell is a poor camped cell, or the indication message is used to indicate a quantity of times that a camped cell is a poor camped cell. The processor 1402 is configured to: perform radio frequency (RF) optimization on the camped cell or optimize a reselection parameter of the camped cell, so that the UE camps on an optimized camped cell.

The network device is a base station or an operations support system (OSS) device.

The network device provided in this embodiment may be configured to perform the method steps corresponding to the network device in the embodiment shown in FIG. 2. Implementation principles and technical effects are similar, and details are not described herein again.

FIG. 15 is a schematic structural diagram of a network device according to another embodiment of the present disclosure. The network device includes a receiver 1501, a processor 1502, and a transmitter 1503. The receiver 1501 is configured to receive a first indication message sent by user equipment (UE), where the first indication message is used to indicate that the UE does not meet a cell reselection condition. The processor 1502 is configured to obtain measurement data of the UE, where the measurement data includes parameter information of a camped cell and parameter information of at least one non-camped cell of the UE. The processor 1502 is further configured to determine, according to the parameter information of the camped cell and parameter information of any non-camped cell, whether a preset condition is met. If the preset condition is met, the processor 1502 performs radio frequency (RF) optimization on the camped cell or optimizes a reselection parameter of the camped cell, so that the UE camps on an optimized camped cell; or if the preset condition is met, the transmitter 1503 sends a second instruction message to the UE, where the second instruction message is used to instruct the UE to use the corresponding non-camped cell as a candidate cell, so that the UE selects, from at least one candidate cell, a cell corresponding to maximum parameter information as a new camped cell, or selects, from at least one candidate cell, any candidate cell as a new camped cell. The preset condition is used to ensure that the parameter information of the non-camped cell is greater than the parameter information of the camped cell.

Further, the parameter information includes reference signal received power (RSRP) or reference signal received quality (RSRQ).

Still further, the preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The network device provided in this embodiment may be configured to perform the method steps corresponding to the network device in the embodiment shown in FIG. 4 or FIG. 5. Implementation principles and technical effects are similar, and details are not described herein again.

FIG. 16 is a schematic structural diagram of user equipment according to still another embodiment of the present disclosure. The user equipment includes a transmitter 1601 and a receiver 1602. The transmitter 1601 is configured to send a first indication message to a network device, where the first indication message is used to indicate that the user equipment (UE) does not meet a cell reselection condition. The receiver 1602 is configured to receive a second instruction message sent by the network device, where the second instruction message is used to instruct the UE to use, as a candidate cell, a non-camped cell that meets a preset condition, so that the UE selects, from at least one candidate cell, a cell corresponding to maximum parameter information as a new camped cell, or selects, from at least one candidate cell, any candidate cell as a new camped cell. The preset condition is used to ensure that parameter information of the non-camped cell is greater than parameter information of a camped cell.

The parameter information includes reference signal received power (RSRP) or reference signal received quality (RSRQ).

The preset condition includes: the parameter information of the camped cell is less than a first threshold, and the parameter information of the non-camped cell is greater than a second threshold; and/or a difference between the parameter information of the non-camped cell and the parameter information of the camped cell is greater than a third threshold.

The network device is a base station or an operations support system (OSS) device.

The user equipment provided in this embodiment may be configured to perform the method steps corresponding to the user equipment in the embodiment shown in FIG. 5. Implementation principles and technical effects are similar, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The storage medium includes any medium that can store program code, such as a ROM, a RAM, a magnetic disk, or an optical disc.

Finally, it should be noted that the foregoing embodiments are merely intended for describing the technical solutions of the present disclosure, but not for limiting the present disclosure. Although the present disclosure is described in detail with reference to the foregoing embodiments, persons of ordinary skill in the art should understand that they may still make modifications to the technical solutions described in the foregoing embodiments without departing from the scope of the technical solutions of the embodiments of the present disclosure, as defined by the appended set of claims.

## Claims

1. A camped cell determining method, executed by a user equipment, UE, the method comprising:
determining (S201), by the UE, whether the UE needs to reselect a cell based on a cell reselection criterion which includes a criterion H and a criterion R;
if the UE does not need to reselect the cell, obtaining (S202), by the UE, parameter information of a camped cell and parameter information of at least one non-camped cell, wherein the parameter information is reference signal received power, RSRP, or reference signal received quality, RSRQ;
determining (S203), by the UE according to the parameter information of the camped cell and parameter information of any non-camped cell, whether a preset condition is met;
if the preset condition is met, sending (S204), by the UE, an indication message to a network device, wherein the indication message is used to indicate that the camped cell is a poor camped cell, or the indication message is used to indicate a quantity of times that the camped cell is a poor camped cell during a time, whereby the network device performs radio frequency, RF, optimization on the camped cell or optimizes a reselection parameter of the camped cell; and
camping (S205), by the UE, on the camped cell, which is optimized, wherein the preset condition is used to ensure that the parameter information of the non-camped cell is greater than the parameter information of the camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold;
wherein the camped cell is a poor camped cell provided that the UE does not meet a reselection criterion but meets the preset condition;
wherein the RF optimization includes adjusting an antenna delivery power, an azimuth or a down-tilt of the camped cell.

2. A camped cell determining method, executed by a network device, the method comprising:
receiving (S401), by the network device, an indication message sent by user equipment, UE, wherein the indication message is used to indicate that a camped cell is a poor camped cell, or the indication message is used to indicate a quantity of times that a camped cell is a poor camped cell during a time; and
performing (S404), by the network device, radio frequency, RF, optimization on the camped cell or optimizing a reselection parameter of the camped cell, whereby the UE camps on the camped cell, which is optimized; wherein the camped cell is a poor camped cell provided that the UE does not meet a reselection criterion but meets the preset condition;
wherein the RF optimization includes adjusting an antenna delivery power, an azimuth or a down-tilt of the camped cell.

3. A camped cell determining method, executed by a network device, the method comprising:
receiving (S501), by the network device, a first indication message sent by user equipment, UE, wherein the first indication message is used to indicate that the UE does not meet a cell reselection condition;
obtaining (S502), by the network device, measurement data of the UE, wherein the measurement data comprises parameter information of a camped cell and parameter information of at least one non-camped cell of the UE, wherein the parameter information is reference signal received power, RSRP, or reference signal received quality, RSRQ, wherein the measurement data is a minimization of drive tests data or measurement report data;
determining (S503), by the network device according to the parameter information of the camped cell and parameter information of any non-camped cell, whether a preset condition is met; and
if the preset condition is met, sending (S504), by the network device, a second instruction message to the UE, wherein the second instruction message is used to instruct the UE to use the at least one non-camped cell which meets the preset condition as a candidate cell, whereby the UE selects, from at least one candidate cell, a cell corresponding to maximum parameter information as a new camped cell, or selects, from at least one candidate cell, any candidate cell as a new camped cell, wherein
the preset condition is used to ensure that the parameter information of the non-camped cell is greater than the parameter information of the camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold.

4. A camped cell determining method, executed by a user equipment, UE, the method comprising:
sending (S501), by the UE, a first indication message to a network device, wherein the first indication message is used to indicate that the UE does not meet a cell reselection condition; and
receiving (S504), by the UE, a second instruction message sent by the network device, wherein the second instruction message is used to instruct the UE to use, as a candidate cell, a non-camped cell that meets a preset condition, whereby the UE selects, from at least one candidate cell, a cell corresponding to maximum parameter information as a new camped cell, or selects, from at least one candidate cell, any candidate cell as a new camped cell, wherein
the preset condition is used to ensure that parameter information of the non-camped cell is greater than parameter information of a camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold;
wherein the parameter information is reference signal received power, RSRP, or reference signal received quality, RSRQ.

5. A user equipment, UE, comprising a processor (1301) and a transmitter (1302), wherein,
the processor (1301) is configured to determine whether the user equipment needs to reselect a cell based on a cell reselection criterion which includes a criterion H and a criterion R; if the UE does not need to reselect the cell, the processor (1301) is further configured to obtain parameter information of a camped cell and parameter information of at least one non-camped cell, wherein the parameter information is reference signal received power, RSRP, or reference signal received quality, RSRQ; and determine, according to the parameter information of the camped cell and parameter information of any non-camped cell, whether a preset condition is met;
if the preset condition is met, the transmitter (1302) is configured to send an indication message to a network device, wherein the indication message is used to indicate that the camped cell is a poor camped cell, or the indication message is used to indicate a quantity of times that the camped cell is a poor camped cell during a time, whereby the network device performs radio frequency, RF, optimization on the camped cell or optimizes a reselection parameter of the camped cell;
the processor (1301) is further configured to determine that the user equipment camps on the camped cell which is optimized; and the preset condition is used to ensure that the parameter information of the non-camped cell is greater than the parameter information of the camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold;
wherein the camped cell is a poor camped cell provided that the UE does not meet a reselection criterion but meets the preset condition.

6. A network device, comprising a receiver (1401) and a processor (1402), wherein,
the receiver (1401) is configured to receive an indication message sent by user equipment, UE, wherein the indication message is used to indicate that a camped cell is a poor camped cell, or the indication message is used to indicate a quantity of times that a camped cell is a poor camped cell during a time; and
the processor (1402) is configured to: perform radio frequency, RF, optimization on the camped cell or optimize a reselection parameter of the camped cell, whereby the UE camps on the camped cell, which is optimized;
wherein the camped cell is a poor camped cell provided that the UE does not meet a reselection criterion but meets the preset condition;
wherein the RF optimization includes adjusting an antenna delivery power, an azimuth or a down-tilt of the camped cell.

7. A network device, comprising a receiver (1501), a processor (1502), and a transmitter (1503), wherein,
the receiver (1501) is configured to receive a first indication message sent by user equipment, UE, wherein the first indication message is used to indicate that the UE does not meet a cell reselection condition;
the processor (1502) is configured to obtain measurement data of the UE, wherein the measurement data comprises parameter information of a camped cell and parameter information of at least one non-camped cell of the UE, wherein the parameter information is reference signal received power, RSRP, or reference signal received quality, RSRQ, wherein the measurement data is a minimization of drive tests data or measurement report data;
the processor (1502) is further configured to determine, according to the parameter information of the camped cell and parameter information of any non-camped cell, whether a preset condition is met;
if the preset condition is met, the transmitter (1503) is configured to send a second instruction message to the UE, wherein the second instruction message is used to instruct the UE to use the at least one non-camped cell which meets the preset condition as a candidate cell, whereby the UE selects, from at least one candidate cell, a cell corresponding to maximum parameter information as a new camped cell, or selects, from at least one candidate cell, any candidate cell as a new camped cell; and
the preset condition is used to ensure that the parameter information of the non-camped cell is greater than the parameter information of the camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold,
wherein the RF optimization includes adjusting an antenna delivery power, an azimuth or a down-tilt of the camped cell.

8. A user equipment, the user equipment comprising:
a transmitter (1601), configured to send a first indication message to a network device, wherein the first indication message is used to indicate that the user equipment, UE, does not meet a cell reselection condition;
a receiver (1602), configured to receive a second instruction message sent by the network device, wherein the second instruction message is used to instruct the UE to use, as a candidate cell, a non-camped cell that meets a preset condition; and
a processor, configured to select, from at least one candidate cell, a cell corresponding to maximum parameter information as a new camped cell, or select, from at least one candidate cell, any candidate cell as a new camped cell; and
wherein the preset condition is used to ensure that parameter information of the non-camped cell is greater than parameter information of a camped cell;
wherein
the preset condition comprises: the parameter information of the camped cell is less than a first threshold, and the parameter information of the non-camped cell is greater than a second threshold; and/or
a difference between the parameter information of the non-camped cell and the parameter information of the camped cell is greater than a third threshold;
wherein the parameter information is reference signal received power, RSRP, or reference signal received quality, RSRQ.

## Patentansprüche

1. Bestimmungsverfahren einer gecampten Zelle, ausgeführt durch ein Benutzergerät (User Equipment, UE), wobei das Verfahren Folgendes umfasst:
Bestimmen (S201), durch das UE, ob das UE eine Zelle auf Basis eines Zellen-Neuauswahlkriteriums, welches ein Kriterium H und ein Kriterium R beinhaltet, erneut auswählen muss;
falls das UE die Zelle nicht erneut auswählen muss, Erlangen (S202), durch das UE, von Parameterinformationen einer gecampten Zelle und Parameterinformationen von zumindest einer nicht gecampten Zelle, wobei die Parameterinformationen eine Referenzsignal-Empfangsleistung (Reference Signal Received Power, RSRP) oder eine Referenzsignal-Empfangsqualität (Reference Signal Received Quality, RSRQ) sind;
Bestimmen (S203), durch das UE, gemäß den Parameterinformationen der gecampten Zelle und Parameterinformationen einer beliebigen nicht gecampten Zelle, ob eine voreingestellte Bedingung erfüllt ist;
falls die voreingestellte Bedingung erfüllt ist, Senden (S204), durch das UE, einer Hinweisnachricht an ein Netzgerät, wobei die Hinweisnachricht dazu genutzt wird, anzugeben, dass es sich bei der gecampten Zelle um eine schlechte gecampte Zelle handelt, oder die Hinweisnachricht wird dazu genutzt, eine Anzahl von Malen anzugeben, welche die gecampte Zelle während einer Zeitspanne eine schlechte gecampte Zelle ist, wobei das Netzgerät Hochfrequenzoptimierung (HF-Optimierung) an der gecampten Zelle durchführt oder einen Neuauswahl-Parameter der gecampten Zelle optimiert; und
Campen (S205), durch das UE, auf der gecampten Zelle, welche optimiert ist, wobei die voreingestellte Bedingung genutzt wird, um zu gewährleisten, dass die Parameterinformationen der nicht gecampten Zelle größer als die Parameterinformationen der gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle;
wobei die gecampte Zelle eine schlechte gecampte Zelle ist, vorausgesetzt, dass das UE ein Neuauswahlkriterium nicht erfüllt, jedoch die voreingestellte Bedingung erfüllt;
wobei die HF-Optimierung Einstellen einer Abgabeleistung einer Antenne, eines Azimuts oder einer Abwärtsneigung der gecampten Zelle umfasst.

2. Bestimmungsverfahren der gecampten Zelle, ausgeführt durch ein Netzgerät, wobei das Verfahren Folgendes umfasst:
Empfangen (S401), durch das Netzgerät, einer von einem Benutzergerät, UE, gesendeten Hinweisnachricht, wobei die Hinweisnachricht genutzt wird, um anzugeben, dass eine gecampte Zelle eine schlechte gecampte Zelle ist, oder die Hinweisnachricht dazu genutzt wird, eine Anzahl von Malen anzugeben, welche eine gecampte Zelle während einer Zeitspanne eine schlechte gecampte Zelle ist; und
Durchführen (S404), durch das Netzgerät, einer Hochfrequenzoptimierung (HF-Optimierung) an der gecampten Zelle oder Optimieren eines Neuauswahl-Parameters der gecampten Zelle, wobei das UE auf der gecampten Zelle, die optimiert ist, campt;
wobei die gecampte Zelle eine schlechte gecampte Zelle ist, vorausgesetzt, dass das UE ein Neuauswahlkriterium nicht erfüllt, jedoch die voreingestellte Bedingung erfüllt;
wobei die HF-Optimierung Einstellen einer Abgabeleistung einer Antenne, eines Azimuts oder einer Abwärtsneigung der gecampten Zelle umfasst.

3. Bestimmungsverfahren der gecampten Zelle, ausgeführt durch ein Netzgerät, wobei das Verfahren Folgendes umfasst:
Empfangen (S501), durch das Netzgerät, einer ersten von einem Benutzergerät, UE, gesendeten Hinweisnachricht, wobei die erste Hinweisnachricht genutzt wird, um anzugeben, dass das UE eine Zellen-Neuauswahlbedingung nicht erfüllt;
Erlangen (S502), durch das Netzgerät, von Messdaten des UE, wobei die Messdaten Parameterinformationen einer gecampten Zelle und Parameterinformationen mindestens einer nicht gecampten Zelle des UE umfassen, wobei die Parameterinformationen eine Referenzsignal-Empfangsleistung, RSRP, oder eine Referenzsignal-Empfangsqualität, RSRQ, sind und wobei die Messdaten Daten für eine Minimierung von Drive-Tests oder Messberichtsdaten sind;
Bestimmen (S503), durch das Netzgerät, gemäß den Parameterinformationen der gecampten Zelle und Parameterinformationen einer beliebigen nicht gecampten Zelle, ob eine voreingestellte Bedingung erfüllt ist; und
falls die voreingestellte Bedingung erfüllt ist, Senden (S504), durch das Netzgerät, einer zweiten Anweisungsnachricht an das UE, wobei die zweite Anweisungsnachricht dazu genutzt wird, das UE anzuweisen, die mindestens eine nicht gecampte Zelle, welche die voreingestellte Bedingung erfüllt, als eine Kandidatenzelle zu nutzen, wobei das UE aus mindestens einer Kandidatenzelle eine Zelle entsprechend maximalen Parameterinformationen als eine neue gecampte Zelle auswählt, oder aus mindestens einer Kandidatenzelle eine beliebige Kandidatenzelle als eine neue gecampte Zelle auswählt, wobei
die voreingestellte Bedingung genutzt wird, um zu gewährleisten, dass die Parameterinformationen der nicht gecampten Zelle größer als die Parameterinformationen der gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle.

4. Bestimmungsverfahren der gecampten Zelle, ausgeführt durch ein Benutzergerät, UE, wobei das Verfahren Folgendes umfasst:
Senden (S501), durch das UE, einer ersten Hinweisnachricht an ein Netzgerät, wobei die erste Hinweisnachricht genutzt wird, um anzugeben, dass das UE eine Zellen-Neuauswahlbedingung nicht erfüllt; und
Empfangen (S504), durch das UE, einer zweiten vom Netzgerät gesendeten Anweisungsnachricht, wobei die zweite Anweisungsnachricht dazu genutzt wird, das UE anzuweisen, eine nicht gecampte Zelle, welche eine voreingestellte Bedingung erfüllt, als eine Kandidatenzelle zu nutzen, wobei das UE aus mindestens einer Kandidatenzelle eine Zelle entsprechend maximalen Parameterinformationen als eine neue gecampte Zelle auswählt oder aus mindestens einer Kandidatenzelle eine beliebige Kandidatenzelle als eine neue gecampte Zelle auswählt, wobei
die voreingestellte Bedingung genutzt wird, um zu gewährleisten, dass Parameterinformationen der nicht gecampten Zelle größer als Parameterinformationen einer gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle;
wobei die Parameterinformationen eine Referenzsignal-Empfangsleistung, RSRP, oder eine Referenzsignal-Empfangsqualität, RSRQ, sind.

5. Benutzergerät, UE, welches einen Prozessor (1301) und einen Sender (1302) umfasst, wobei
der Prozessor (1301) dafür eingerichtet ist, zu bestimmen, ob das Benutzergerät eine Zelle auf Basis eines Zellen-Neuauswahlkriteriums, welches ein Kriterium H und ein Kriterium R beinhaltet, erneut auswählen muss;
falls das UE die Zelle nicht erneut auswählen muss, ist der Prozessor (1301) außerdem dafür eingerichtet, Parameterinformationen einer gecampten Zelle und Parameterinformationen von mindestens einer nicht gecampten Zelle zu erlangen, wobei die Parameterinformationen eine Referenzsignal-Empfangsleistung, RSRP, oder eine Referenzsignal-Empfangsqualität, RSRQ, sind; und gemäß den Parameterinformationen der gecampten Zelle und Parameterinformationen einer beliebigen nicht gecampten Zelle zu bestimmen, ob die voreingestellte Bedingung erfüllt ist;
falls die voreingestellte Bedingung erfüllt ist, ist der Sender (1302) dafür eingerichtet, eine Hinweisnachricht an ein Netzgerät zu senden, wobei die Hinweisnachricht dazu genutzt wird, anzugeben, dass es sich bei der gecampten Zelle um eine schlechte gecampte Zelle handelt, oder die Hinweisnachricht dazu genutzt wird, eine Anzahl von Malen anzugeben, welche die gecampte Zelle während einer Zeitspanne eine schlechte gecampte Zelle ist, wobei das Netzgerät Hochfrequenzoptimierung (HF-Optimierung) an der gecampten Zelle durchführt oder einen Neuauswahl-Parameter der gecampten Zelle optimiert;
der Prozessor (1301) außerdem dafür eingerichtet ist, zu bestimmen, dass das Benutzergerät auf der gecampten Zelle, die optimiert ist, campt; und
die voreingestellte Bedingung genutzt wird, um zu gewährleisten, dass die Parameterinformationen der nicht gecampten Zelle größer als die Parameterinformationen der gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle; wobei die gecampte Zelle eine schlechte gecampte Zelle ist, vorausgesetzt, dass das UE ein Neuauswahlkriterium nicht erfüllt, jedoch die voreingestellte Bedingung erfüllt.

6. Netzgerät, welches einen Empfänger (1401) und einen Prozessor (1402) umfasst, wobei
der Empfänger (1401) dafür eingerichtet ist, eine von einem Benutzergerät, UE, gesendete Hinweisnachricht zu empfangen, wobei die Hinweisnachricht genutzt wird, um anzugeben, dass eine gecampte Zelle eine schlechte gecampte Zelle ist, oder die Hinweisnachricht dazu genutzt wird, eine Anzahl von Malen anzugeben, welche eine gecampte Zelle während einer Zeitspanne eine schlechte gecampte Zelle ist; und
der Prozessor (1402) für Folgendes eingerichtet ist: Durchführen einer Hochfrequenzoptimierung (HF-Optimierung) an der gecampten Zelle oder Optimieren eines Neuauswahl-Parameters der gecampten Zelle, wobei das UE auf der gecampten Zelle, die optimiert ist, campt;
wobei die gecampte Zelle eine schlechte gecampte Zelle ist, vorausgesetzt, dass das UE ein Neuauswahlkriterium nicht erfüllt, jedoch die voreingestellte Bedingung erfüllt;
wobei die HF-Optimierung das Einstellen einer Abgabeleistung einer Antenne, eines Azimuts oder einer Abwärtsneigung der gecampten Zelle umfasst.

7. Netzgerät, welches einen Empfänger (1501), einen Prozessor (1502) und einen Sender (1503) umfasst, wobei
der Empfänger (1501) dafür eingerichtet ist, eine erste von einem Benutzergerät, UE, gesendete Hinweisnachricht zu empfangen, wobei die erste Hinweisnachricht genutzt wird, um anzugeben, dass das UE eine Zellen-Neuauswahlbedingung nicht erfüllt; der Prozessor (1502) dafür eingerichtet ist, Messdaten des UE zu erlangen, wobei die Messdaten Parameterinformationen einer gecampten Zelle und Parameterinformationen mindestens einer nicht gecampten Zelle des UE umfassen, wobei die Parameterinformationen eine Referenzsignal-Empfangsleistung, RSRP, oder eine Referenzsignal-Empfangsqualität, RSRQ, sind, und wobei die Messdaten Daten für eine Minimierung von Drive-Tests oder Messberichtsdaten sind;
der Prozessor (1502) außerdem dafür eingerichtet ist, gemäß den Parameterinformationen der gecampten Zelle und Parameterinformationen einer beliebigen nicht gecampten Zelle zu bestimmen, ob eine voreingestellte Bedingung erfüllt ist;
falls die voreingestellte Bedingung erfüllt ist, der Sender (1503) dafür eingerichtet ist, eine zweite Anweisungsnachricht an das UE zu senden, wobei die zweite Anweisungsnachricht dazu genutzt wird, das UE anzuweisen, die mindestens eine nicht gecampte Zelle, welche die voreingestellte Bedingung erfüllt, als eine Kandidatenzelle zu nutzen, wobei das UE aus mindestens einer Kandidatenzelle eine Zelle entsprechend maximalen Parameterinformationen als eine neue gecampte Zelle auswählt oder aus mindestens einer Kandidatenzelle eine beliebige Kandidatenzelle als eine neue gecampte Zelle auswählt; und
die voreingestellte Bedingung genutzt wird, um zu gewährleisten, dass die Parameterinformationen der nicht gecampten Zelle größer als die Parameterinformationen der gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle, wobei die HF-Optimierung das Einstellen einer Abgabeleistung einer Antenne, eines Azimuts oder einer Abwärtsneigung der gecampten Zelle umfasst.

8. Benutzergerät, wobei das Benutzergerät Folgendes umfasst:
einen Sender (1601), der dafür eingerichtet ist, eine erste Hinweisnachricht an ein Netzgerät zu senden, wobei die erste Hinweisnachricht genutzt wird, um anzugeben, dass das Benutzergerät, UE, eine Zellen-Neuauswahlbedingung nicht erfüllt;
einen Empfänger (1602), der dafür eingerichtet ist, eine zweite vom Netzgerät gesendete Anweisungsnachricht zu empfangen, wobei die zweite Anweisungsnachricht dazu genutzt wird, das UE anzuweisen, eine nicht gecampte Zelle, die eine voreingestellte Bedingung erfüllt, als eine Kandidatenzelle zu nutzen;
und
einen Prozessor, der dafür eingerichtet ist, aus mindestens einer Kandidatenzelle eine Zelle entsprechend maximalen Parameterinformationen als eine neue gecampte Zelle auszuwählen oder aus mindestens einer Kandidatenzelle eine beliebige Kandidatenzelle als eine neue gecampte Zelle auszuwählen; und
wobei die voreingestellte Bedingung genutzt wird, um zu gewährleisten, dass Parameterinformationen der nicht gecampten Zelle größer als Parameterinformationen einer gecampten Zelle sind;
wobei
die voreingestellte Bedingung Folgendes umfasst: die Parameterinformationen der gecampten Zelle sind kleiner als eine erste Schwelle, und die Parameterinformationen der nicht gecampten Zelle sind größer als eine zweite Schwelle; und/oder
eine Differenz zwischen den Parameterinformationen der nicht gecampten Zelle und den Parameterinformationen der gecampten Zelle ist größer als eine dritte Schwelle;
wobei die Parameterinformationen eine Referenzsignal-Empfangsleistung, RSRP, oder eine Referenzsignal-Empfangsqualität, RSRQ, sind.

## Revendications

1. Procédé de détermination de cellule mise en attente, exécuté par un équipement utilisateur, UE, le procédé comprenant :
le fait de déterminer (S201), par l'UE, si l'UE a besoin de resélectionner une cellule d'après un critère de resélection de cellule qui comporte un critère H et un critère R;
si l'UE n'a pas besoin de resélectionner la cellule, l'obtention (S202), par l'UE, d'une information de paramètre d'une cellule mise en attente et d'une information de paramètre d'au moins une cellule non mise en attente, dans lequel l'information de paramètre est une puissance reçue de signal de référence, RSRP, ou une qualité reçue de signal de référence, RSRQ ;
le fait de déterminer (S203), par l'UE selon l'information de paramètre de la cellule mise en attente et l'information de paramètre de toute cellule non mise en attente, si une condition préétablie est satisfaite ;
si la condition préétablie est satisfaite, l'envoi (S204), par l'UE, d'un message d'indication à un dispositif de réseau, dans lequel le message d'indication est utilisé pour indiquer que la cellule mise en attente est une cellule mise en attente médiocre, ou le message d'indication est utilisé pour indiquer un nombre de fois que la cellule mise en attente est une cellule mise en attente médiocre pendant un temps, moyennant quoi le dispositif de réseau réalise une optimisation de fréquence radio, RF, sur la cellule mise en attente ou optimise un paramètre de resélection de la cellule mise en attente ; et
la mise en attente (S205), par l'UE, sur la cellule mise en attente, qui est optimisée, dans lequel
la condition préétablie est utilisée pour s'assurer que l'information de paramètre de la cellule non mise en attente est supérieure à l'information de paramètre de la cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou une différence entre l'information de paramètre de la cellule non mise en attente et
l'information de paramètre de la cellule mise en attente est supérieure à un troisième seuil ;
dans lequel la cellule mise en attente est une cellule mise en attente médiocre à condition que l'UE ne satisfasse pas un critère de resélection mais satisfasse la condition préétablie ;
dans lequel l'optimisation RF comporte l'ajustement d'une puissance de diffusion d'antenne, d'un azimut ou d'une inclinaison vers le bas de la cellule mise en attente.

2. Procédé de détermination de cellule mise en attente, exécuté par un dispositif de réseau, le procédé comprenant :
la réception (S401), par le dispositif de réseau, d'un message d'indication envoyé par un équipement utilisateur, UE, dans lequel le message d'indication est utilisé pour indiquer qu'une cellule mise en attente est une cellule mise en attente médiocre, ou le message d'indication est utilisé pour indiquer un nombre de fois qu'une cellule mise en attente est une cellule mise en attente médiocre pendant un temps ; et
la réalisation (S404), par le dispositif de réseau, d'une optimisation de fréquence radio, RF, sur la cellule mise en attente ou l'optimisation d'un paramètre de resélection de la cellule mise en attente, moyennant quoi l'UE se met en attente sur la cellule mise en attente, qui est optimisée ;
dans lequel la cellule mise en attente est une cellule mise en attente médiocre à condition que l'UE ne satisfasse pas un critère de resélection mais satisfasse la condition préétablie ;
dans lequel l'optimisation RF comporte l'ajustement d'une puissance de diffusion d'antenne, d'un azimut ou d'une inclinaison vers le bas de la cellule mise en attente.

3. Procédé de détermination de cellule mise en attente, exécuté par un dispositif de réseau, le procédé comprenant :
la réception (S501)), par le dispositif de réseau, d'un premier message d'indication envoyé par un équipement utilisateur, UE, dans lequel le premier message d'indication est utilisé pour indiquer que l'UE ne satisfait pas une condition de resélection de cellule ;
l'obtention (S502), par le dispositif de réseau, de données de mesure de l'UE, dans lequel les données de mesure comprennent une information de paramètre d'une cellule mise en attente et une information de paramètre d'au moins une cellule non mise en attente de l'UE, dans lequel l'information de paramètre est une puissance reçue de signal de référence, RSRP, ou une qualité reçue de signal de référence, RSRQ, dans lequel les données de mesure sont une minimisation de données d'essais de pilotage ou de données de signalement de mesure ;
le fait de déterminer (S503), par le dispositif de réseau selon l'information de paramètre de la cellule mise en attente et l'information de paramètre de toute cellule non mise en attente, si une condition préétablie est satisfaite ; et
si la condition préétablie est satisfaite, l'envoi (S504), par le dispositif de réseau, d'un second message d'instruction à l'UE, dans lequel le second message d'instruction est utilisé pour donner l'instruction à l'UE d'utiliser l'au moins une cellule non mise en attente qui satisfait la condition préétablie en tant que cellule candidate, moyennant quoi l'UE sélectionne, parmi au moins une cellule candidate, une cellule correspondant à une information de paramètre maximale en tant que nouvelle cellule mise en attente, ou sélectionne, parmi au moins une cellule candidate, toute cellule candidate en tant que nouvelle cellule mise en attente, dans lequel
la condition préétablie est utilisée pour s'assurer que l'information de paramètre de la cellule non mise en attente est supérieure à l'information de paramètre de la cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou une différence entre l'information de paramètre de la cellule non mise en attente et
l'information de paramètre de la cellule mise en attente est supérieure à un troisième seuil.

4. Procédé de détermination de cellule mise en attente, exécuté par un équipement utilisateur, UE, le procédé comprenant :
l'envoi (S501), par l'UE, d'un premier message d'indication à un dispositif de réseau, dans lequel le premier message d'indication est utilisé pour indiquer que l'UE ne satisfait pas une condition de resélection de cellule ; et
la réception (S504), par l'UE, d'un second message d'instruction envoyé par le dispositif de réseau, dans lequel le second message d'instruction est utilisé pour donner l'instruction à l'UE d'utiliser, en tant que cellule candidate, une cellule non mise en attente qui satisfait une condition préétablie, moyennant quoi l'UE sélectionne, parmi au moins une cellule candidate, une cellule correspondant à une information de paramètre maximale en tant que nouvelle cellule mise en attente, ou sélectionne, parmi au moins une cellule candidate, toute cellule candidate en tant que nouvelle cellule mise en attente, dans lequel
la condition préétablie est utilisée pour s'assurer qu'une information de paramètre de la cellule non mise en attente est supérieure à une information de paramètre d'une cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou une différence entre l'information de paramètre de la cellule non mise en attente et l'information de paramètre de la cellule mise en attente est supérieure à un troisième seuil ;
dans lequel l'information de paramètre est une puissance reçue de signal de référence, RSRP, ou une qualité reçue de signal de référence, RSRQ.

5. Equipement utilisateur, UE, comprenant un processeur (1301) et un émetteur (1302), dans lequel,
le processeur (1301) est configuré pour déterminer si l'équipement utilisateur a besoin de resélectionner une cellule d'après un critère de resélection de cellule qui comporte un critère H et un critère R;
si l'UE n'a pas besoin de resélectionner la cellule, le processeur (1301) est en outre configuré pour obtenir une information de paramètre d'une cellule mise en attente et une information de paramètre d'au moins une cellule non mise en attente, dans lequel l'information de paramètre est une puissance reçue de signal de référence, RSRP, ou une qualité reçue de signal de référence, RSRQ ; et déterminer, selon l'information de paramètre de la cellule mise en attente et l'information de paramètre de toute cellule non mise en attente, si une condition préétablie est satisfaite ;
si la condition préétablie est satisfaite, l'émetteur (1302) est configuré pour envoyer un message d'indication à un dispositif de réseau, dans lequel le message d'indication est utilisé pour indiquer que la cellule mise en attente est une cellule mise en attente médiocre, ou le message d'indication est utilisé pour indiquer un nombre de fois que la cellule mise en attente est une cellule mise en attente médiocre pendant un temps, moyennant quoi le dispositif de réseau réalise une optimisation de fréquence radio, RF, sur la cellule mise en attente ou optimise un paramètre de resélection de la cellule mise en attente ;
le processeur (1301) est en outre configuré pour déterminer que l'équipement utilisateur se met en attente sur la cellule mise en attente qui est optimisée ; et
la condition préétablie est utilisée pour s'assurer que l'information de paramètre de la cellule non mise en attente est supérieure à l'information de paramètre de la cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou
une différence entre l'information de paramètre de la cellule non mise en attente et l'information de paramètre de la cellule mise en attente est supérieure à un troisième seuil ;
dans lequel la cellule mise en attente est une cellule mise en attente médiocre à condition que l'UE ne satisfasse pas un critère de resélection mais satisfasse la condition préétablie ;

6. Dispositif de réseau, comprenant un récepteur (1401) et un processeur (1402), dans lequel,
le récepteur (1401) est configuré pour recevoir un message d'indication envoyé par un équipement utilisateur, UE, dans lequel le message d'indication est utilisé pour indiquer qu'une cellule mise en attente est une cellule mise en attente médiocre, ou le message d'indication est utilisé pour indiquer un nombre de fois qu'une cellule mise en attente est une cellule mise en attente médiocre pendant un temps ; et
le processeur (1402) est configuré pour : réaliser une optimisation de fréquence radio, RF, sur la cellule mise en attente ou optimiser un paramètre de resélection de la cellule mise en attente, moyennant quoi l'UE se met en attente sur la cellule mise en attente, qui est optimisée ;
dans lequel la cellule mise en attente est une cellule mise en attente médiocre à condition que l'UE ne satisfasse pas un critère de resélection mais satisfasse la condition préétablie ;
dans lequel l'optimisation RF comporte l'ajustement d'une puissance de diffusion d'antenne, d'un azimut ou d'une inclinaison vers le bas de la cellule mise en attente.

7. Dispositif de réseau, comprenant un récepteur (1501), un processeur (1502), et un émetteur (1503), dans lequel,
le récepteur (1501) est configuré pour recevoir un premier message d'indication envoyé par un équipement utilisateur, UE, dans lequel le premier message d'indication est utilisé pour indiquer que l'UE ne satisfait pas une condition de resélection de cellule ;
le processeur (1502) est configuré pour obtenir des données de mesure de l'UE, dans lequel les données de mesure comprennent une information de paramètre d'une cellule mise en attente et une information de paramètre d'au moins une cellule non mise en attente de l'UE, dans lequel l'information de paramètre est une puissance reçue de signal de référence, RSRP, ou une qualité reçue de signal de référence, RSRQ, dans lequel les données de mesure sont une minimisation de données d'essais de pilotage ou de données de signalement de mesure ;
le processeur (1502) est en outre configuré pour déterminer, selon l'information de paramètre de la cellule mise en attente et l'information de paramètre de toute cellule non mise en attente, si une condition préétablie est satisfaite ;
si la condition préétablie est satisfaite, l'émetteur (1503) est configuré pour envoyer un second message d'instruction à l'UE, dans lequel le second message d'instruction est utilisé pour donner l'instruction à l'UE d'utiliser l'au moins une cellule non mise en attente qui satisfait la condition préétablie en tant que cellule candidate, moyennant quoi l'UE sélectionne, parmi au moins une cellule candidate, une cellule correspondant à une information de paramètre maximale en tant que nouvelle cellule mise en attente, ou sélectionne, parmi au moins une cellule candidate, toute cellule candidate en tant que nouvelle cellule mise en attente ; et
la condition préétablie est utilisée pour s'assurer que l'information de paramètre de la cellule non mise en attente est supérieure à l'information de paramètre de la cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou une différence entre l'information de paramètre de la cellule non mise en attente et l'information de paramètre de la cellule mise en attente est supérieure à un troisième seuil ;
dans lequel l'optimisation RF comporte l'ajustement d'une puissance de diffusion d'antenne, d'un azimut ou d'une inclinaison vers le bas de la cellule mise en attente.

8. Equipement utilisateur, l'équipement utilisateur comprenant :
un émetteur (1601), configuré pour envoyer un premier message d'indication à un dispositif de réseau, dans lequel le premier message d'indication est utilisé pour indiquer que l'équipement utilisateur, UE, ne satisfait pas une condition de resélection de cellule ;
un récepteur (1602), configuré pour recevoir un second message d'instruction envoyé par le dispositif de réseau, dans lequel le second message d'instruction est utilisé pour donner l'instruction à l'UE d'utiliser, en tant que cellule candidate, une cellule non mise en attente qui satisfait une condition préétablie ; et
un processeur, configuré pour sélectionner, parmi au moins une cellule candidate, une cellule correspondant à une information de paramètre maximale en tant que nouvelle cellule mise en attente, ou sélectionner, parmi au moins une cellule candidate, toute cellule candidate en tant que nouvelle cellule mise en attente ; et
dans lequel la condition préétablie est utilisée pour s'assurer qu'une information de paramètre de la cellule non mise en attente est supérieure à une information de paramètre d'une cellule mise en attente ;
dans lequel
la condition préétablie comprend : l'information de paramètre de la cellule mise en attente est inférieure à un premier seuil, et l'information de paramètre de la cellule non mise en attente est supérieure à un deuxième seuil ; et/ou une différence entre l'information de paramètre de la cellule non mise en attente et
l'information de paramètre de la cellule mise en attente est supérieure à un troisième seuil ;
dans lequel l'information de paramètre est une puissance reçue de signal de référence, RSRP, ou une qualité reçue de signal de référence, RSRQ.
